# EUROPÄISCHE PATENTSCHRIFT

(11) **EP 2 361 285 B1**
(45) Veröffentlichungstag und Bekanntmachung des Hinweises auf die Patenterteilung: **11.10.2017**
(21) Anmeldenummer: 09795929.0
(22) Anmeldetag: 18.12.2009
(51) Int. Cl.: C09C 1/00, C09C 3/04, C09D 5/03, C09D 5/36, C09D 7/12, C08K 9/08

(54) **PIGMENTGRANULATE**
PIGMENT GRANULES
GRANULATS À PIGMENTS

(30) Priorität: 22.12.2008 DE 102008064202
(43) Veröffentlichungstag der Anmeldung: 31.08.2011
(73) Patentinhaber: Merck Patent GmbH, 64293 Darmstadt (DE)
(72) Erfinder: RATHSCHLAG, Thomas, 64560 Riedstadt (DE); GRIESSMANN, Carsten, 64846 Gross-Zimmern (DE)
(86) Internationale Anmeldenummer: PCT/EP2009/009117
(87) Internationale Veröffentlichungsnummer: WO 2010/072379

(56) Entgegenhaltungen:
- EP-A1- 1 520 876
- DE-A1-102006 039 913
- US-A- 5 455 288

## Beschreibung

Die vorliegende Erfindung betrifft Pigmentgranulate enthaltend ein oder mehrere plättchenförmige Effektpigmente sowie deren Verwendung zur Pigmentierung von Anwendungsmedien, z.B. Pulverlacke und insbesondere Kunststoffen, sowie zur Herstellung von Masterbatches.

Das Fließverhalten von Pigmenten auf Basis von plättchenförmigen Substraten, wie z.B. Glimmerplättchen, ist häufig unbefriedigend. Bei einer Vielzahl von Anwendungen, insbesondere im Druck- und Farbenbereich, führt dies nicht zu größeren Problemen. Bei der Einarbeitung in Kunststoffen jedoch erweist sich das schlechte Fließverhalten dieser Pigmente als besonders problematisch.

Darüber hinaus kommt es bei der Verarbeitung von Perlglanzpigmenten, z.B. bei der Herstellung von Masterbatches, wie z.B. beschrieben in DE 10 2006 039 913 A1 und U.S. 5,455,288, zu einer ausgeprägten Staubentwicklung, was einen erhöhten apparativen Aufwand zur Beseitigung der Stäube und zur Reinigung der Maschinen erfordert.

Es ist an sich bekannt Pigmente mit organischen Komponenten zu beschichten um die Einarbeitung der Pigmente, z.B. in Kunststoffe, Pulverlacken, Tonern, etc., zu erleichtern. Derartige Verfahren für die Herstellung von Pigmentpräparationen und pigmenthaltigen Granulaten sind beispielsweise bekannt aus der DE 26 03 211, WO 2005/052076, WO 2005/019327, U.S. 2002/0098435 A1 und EP 1 520 876 A1.

Die mechanischen Eigenschaften von Effektpigmenten basierend auf plättchenförmigen Substraten sind häufig sehr unbefriedigend, was sich in Form von staubigem Abrieb auf Grund von Bruch der Pigmente sowie Haftungsverlust der Beschichtung vom Trägersubstrat in Form von Delaminierung äußert. Weiterhin ist ein Problem die Durchsatzerhöhung im Extrusionsprozess bei der Einarbeitung von pigmenthaltigen Präparationen in Kunststoffen. Häufig zeichnen sich die Präparationen aus dem Stand der Technik durch eine zu geringe Oxidationsstabilität aus.

Weiterhin hat sich aber gezeigt, dass die aus dem Stand der Technik bekannten Pigmentgranulate enthaltend > 50 % an Effektpigment und ein organisches Polymer häufig nicht oxidationsstabil sind und zur gefährlichen Selbsterhitzung neigen, obwohl derartige Pigmentgranulate nicht als leichtentzündliche Feststoffe (gemäß Prüfvorschrift A.10. Entzündlichkeit Fester Stoffe des Amtsblattes der Europäischen Gemeinschaften Nr. L 383 A/76 vom 29.12.1992) einzustufen sind.

Aufgabe der vorliegenden Erfindung ist daher die Bereitstellung von nichtstaubenden Pigmentgranulaten, die sich sehr gut in Anwendungsmedien, insbesondere in Polyolefin-Kunststoffen, einarbeiten lassen und gleichzeitig keine Neigung zur gefährlichen Selbsterhitzung zeigen.

Überraschenderweise wurde nun gefunden, dass Pigmentgranulate enthaltend ein oder mehrere plättchenförmige Effektpigmente, Polymerpartikel, mindestens einen Haftvermittler, mindestens ein Antioxidans, und ggf. Additive zur Anwendung, insbesondere in Kunststoffen, sehr gut geeignet sind und auch bei der Herstellung von Masterbatchen sehr gut eingesetzt werden können. Diese Pigmentgranulate sind zudem gegen Selbstentzündung geschützt.

Gegenstand der vorliegenden Erfindung sind daher Pigmentgranulate gemäß Anspruch 1, die sich dadurch auszeichnen, dass sie ein oder mehrere plättchenförmige Effektpigmente, Polymerpartikel, mindestens einen Haftvermittler, mindestens ein Antioxidans und ggf. Additive enthalten.

Das Effektpigment ist dabei vorzugsweise auf der Oberfläche mit dem Polymerpartikel verklebt bzw. teilweise oder vollständig beschichtet.

Derartige Pigmentgranulate zeigen eine deutlich reduzierte Neigung zur Selbstentzündung und sind aufgrund ihrer guten Fließeigenschaften insbesondere geeignet zur Pigmentierung von Kunststoffen sowie bei der Herstellung von Masterbatches
Gegenstand der vorliegenden Erfindung ist weiterhin ein Verfahren zur Herstellung der erfindungsgemäßen Pigmentgranulate, wobei ein oder mehrere plättchenförmige Effektpigmente, ein oder mehrere Polymerpartikel, mindestens ein Haftvermittler und ggf. Additive gleichzeitig oder nacheinander gemischt werden.

Die erfindungsgemäßen Pigmentgranulate erweisen sich als besonders vorteilhaft für die Einarbeitung in Kunststoffe. Darüber hinaus sind die erfindungsgemäßen Pigmentgranulate nicht staubend und sehr gut rieselfähig, was den apparativen Aufwand bei ihrer Verarbeitung verringert. Zusätzlich kann bei Verwendung der erfindungsgemäßen Pigmentgranulate auf einem Doppelschneckenextruder der Durchsatz, je nach Bedingungen, mindestens um den Faktor 2-5 gegenüber dem unpräparierten Pigment gesteigert werden. Weiterhin lassen sich unter Einsatz der erfindungsgemäßen Pigmentgranulate auf einem Einschneckenextruder Masterbatches mit einem Effektpigmentanteil von bis zu 50 Gew.-%, bezogen auf den Masterbatch, herstellen.

Wesentlicher Bestandteil der erfindungsgemäßen Pigmentgranulate sind neben dem Effektpigment die Polymerpartikel.

Die Polymerpartikel bestehen vorzugsweise aus Polyolefinen, insbesondere aus Polyethylen (PE) und Polypropylen (PP). Ganz besonders bevorzugt sind LLD-PE-Kunststoffe (LLD: linear low density), wie sie beispielsweise von der Fa. ExxonMobil unter den Markennamen Escorene LL6101 XR als Kunststoff-Pellets oder Escorene LL6101 RQ als Kunststoff-Pulver im Handel angeboten werden.

Die Polymerpartikel haben vorzugsweise eine Partikelgröße von 0,5-6 mm, insbesondere von 0,5 - 5 mm und ganz besonders bevorzugt von 0,8 - 4 mm. Die Polymerpartikel sind in der Regel sphärisch.

Die im Handel erhältlichen Kunststoffpulver weisen häufig Partikelgrößen von 0,5-1,5 mm bzw. Kunststoffpellets weisen häufig Partikelgrößen von 3 - 6 mm auf. Diese Polymerpartikel müssen dann für ihren Einsatz bei der Herstellung der erfindungsgemäßen Pigmentpräparation zuvor aufgeschmolzen werden und dann beispielsweise durch Granulation, z.B. schmolzen werden und dann beispielsweise durch Granulation, z.B. Unterwassergranulation, und Einstellung der Korngröße, z. B. mittels einer Lochscheibe, auf die gewünschte Partikelgröße eingestellt werden.

Es können auch Gemische von unterschiedlichen Polymerpartikeln eingesetzt werden, d.h. sowohl Polymermaterialien mit unterschiedlicher Größe als auch Trägermaterialien aus unterschiedlichen Materialien z.B.
- Gemische aus Polymerpartikeln unterschiedlicher Partikelgröße
- Gemische aus Polymerpartikeln unterschiedlicher chemischer Struktur und thermoplastischem Aufbau.

Geeignete Haftvermittler sind vorzugsweise Wachs-Emulsionen, im Handel beispielsweise erhältlich von der Fa. KEIM ADDITEC Surface GmbH. Geeignete Wachs-Emulsionen sind z.B. LD-PE-Wachs-Emulsionen (LD = low density), z.B. Ultralube V-06070480 der Fa. KEIM ADDITEC Surface GmbH. Die Wachs-Emulsionen enthalten vorzugsweise Emulsionsteilchen der Größe 20-100 nm. Die geeigneten Wachs-Emulsionen weisen vorzugsweise einen Schmelzbereich von 70-160 °C, insbesondere von 80-140 °C und ganz besonders bevorzugt von 90-130 °C auf. Besonders bevorzugt handelt es sich bei den Wachs-Emulsionen um solche ausgewählt aus der Gruppe der HD-PE (HD = high density), LD-PE (LD = low density), LLD-PE (LLD = linear low density), VLD-PE (VLD = very low density), PP-Wachs-Emulsionen.

Der Anteil an Haftvermittler in den erfindungsgemäßen Pigmentgranulaten beträgt vorzugsweise 1 - 30 Gew.%, insbesondere 5 - 20 Gew.%, ganz besonders bevorzugt 7,5 - 15 Gew.% bezogen auf die Gesamtmasse des Granulats.

In den erfindungsgemäßen Pigmentgranulaten liegen die Effektpigmente, das Antioxidans, die Polymerpartikel, die Haftvermittler sowie ggf. Additive miteinander gemischt vor. Vorzugsweise werden das Effektpigment und die Polymerpartikel durch die Haftvermittler zumindest partiell oder vollständig beschichtet oder umhüllt. Eine vollständige Umhüllung und "Verklebung" des plättchenförmigen Effektpigmentes und der Polymerpartikel mit dem Haftvermittler ist ganz besonders bevorzugt.

Die eingesetzten Wachs-Emulsionen sollten vorzugsweise Teilchengrößen von 10-100 nm aufweisen. Teilchengrößen > 100 nm führen häufig nicht zu gleichen Haftprimereigenschaften, da besonders die mechanischen Eigenschaften, wie Haftung und Abriebstabilität, schlechter werden bzw. zunehmen.

Die Möglichkeit, nach Trocknung der Wachsemulsion, mit deren feinteiligen Emulsionspartikeln die Oberfläche der Pigmente einzubinden und auf den Polymerpartikeln zu verankern, nimmt mit zunehmender Teilchengröße der Wachsemulsionspartikel ab.

Bei den plättchenförmigen Effektpigmenten handelt es sich vorzugsweise um Perlglanzpigmente, Interferenzpigmente, Metalleffektpigmente, Mehrschichtpigmente mit transparenten, semitransparenten und/oder opaken Schichten, holographische Pigmente, goniochromatische Pigmente, beschichtete oder unbeschichtete BiOCI-Plättchen und/oder LCP-Pigmente.

Gemäß der vorliegenden Erfindung einsetzbare Perlglanzpigmente, Interferenzpigmente, Metalleffektpigmente oder Mehrschichtpigmente mit transparenten, semitransparenten und/oder opaken Schichten basieren insbesondere auf Trägern, wobei dieser vorzugsweise plättchenförmig ist. Beispielsweise eignen sich plättchenförmiges TiO₂, synthetischer (z.B. Fluorophlogopit) oder natürlicher Glimmer, Talkum, Kaolin, dotierte oder undotierte Glasplättchen, Metallplättchen, plättchenförmiges SiO₂, plättchenförmiges Al₂O₃ oder plättchenförmiges Eisenoxid. Die Metallplättchen können unter anderem aus Aluminium, Titan, Bronze, Stahl oder Silber bestehen, vorzugsweise Aluminium und/oder Titan. Die Metallplättchen können dabei durch entsprechende Behandlung passiviert sein. Die Glasplättchen können aus allen dem Fachmann bekannten Glasarten bestehen, z.B. aus A-Glas, E-Glas, C-Glas, ECR-Glas, Altglas, Fensterglas, Borosilikatglas, Duran^{®}-Glas, Laborgeräteglas oder optisches Glas. Der Brechungsindex der Glasplättchen liegt vorzugsweise bei 1,45-1,80, insbesondere bei 1,50-1,70. Besonders bevorzugt bestehen die Glassubstrate aus C-Glas, ECR-Glas oder Borosilikatglas.

In einer bevorzugten Ausführungsform kann der Träger mit einer oder mehreren transparenten semitransparenten und/oder opaken Schichten enthaltend Metalloxide, Metalloxidhydrate, Metallsuboxide, Metalle, Metallfluoride, Metallnitride, Metalloxynitride oder Mischungen dieser Materialien beschichtet sein. Die Metalloxid-, Metalloxidhydrat-, Metallsuboxid-, Metall-, Metallfluorid-, Metallnitrid-, Metalloxynitridschichten oder die Mischungen hieraus können niedrig- (Brechzahl < 1.8) oder hochbrechend (Brechzahl ≥ 1.8) sein. Als Metalloxide und Metalloxidhydrate eignen sich alle dem Fachmann bekannten Metalloxide oder Metalloxidhydrate, wie z. B. Aluminiumoxid, Aluminiumoxidhydrat, Siliziumoxid, Siliziumoxidhydrat, Eisenoxid, Zinnoxid, Ceroxid, Zinkoxid, Zirkoniumoxid, Chromoxid, Titanoxid, insbesondere Titandioxid, Titanoxidhydrat sowie Mischungen hieraus, wie z.B. Ilmenit oder Pseudobrookit. Als Metallsuboxide können beispielsweise die Titansuboxide eingesetzt werden. Als Metalle eignen sich z.B. Chrom, Aluminium, Nickel, Silber, Gold, Titan, Kupfer oder Legierungen, als Metallfluorid eignet sich beispielsweise Magnesiumfluorid. Als Metallnitride oder Metalloxynitride können beispielsweise die Nitride oder Oxynitride der Metalle Titan, Zirkonium und/oder Tantal eingesetzt werden. Bevorzugt werden Metalloxid-, Metall-, Metallfluorid und/oder Metalloxidhydratschichten und ganz besonders bevorzugt Metalloxid- und/oder Metalloxidhydratschichten auf den Träger aufgebracht. Weiterhin können auch Mehrschichtaufbauten aus hoch- und niedrigbrechenden Metalloxid-, Metalloxidhydrat-, Metall- oder Metallfluoridschichten vorliegen, wobei sich vorzugsweise hoch- und niedrigbrechende Schichten abwechseln. Insbesondere bevorzugt sind Schichtpakete aus einer hoch- und einer niedrigbrechenden Schicht, wobei auf dem Träger eine oder mehrere dieser Schichtpakete aufgebracht sein können. Die Reihenfolge der hoch-und niedrigbrechenden Schichten kann dabei an den Träger angepasst werden, um den Träger in den Mehrschichtaufbau mit einzubeziehen. In einer weiteren Ausführungsform können die Metalloxid-, Metalloxidhydrat-, Metallsuboxid-, Metall-, Metallfluorid-, Metallnitrid-, Metalloxynitridschichten mit Farbmitteln oder anderen Elementen versetzt oder dotiert sein. Als weitere Farbmittel neben den Effektpigmenten eignen sich beispielsweise organische oder anorganische Farbpigmente wie farbige Metalloxide, z.B. Magnetit, Chromoxid oder Farbpigmente wie z.B. Berliner Blau, Ultramarin, Bismutvanadat, Thenards Blau, oder aber organische Farbpigmente wie z.B. Indigo, Azopigmente, Phthalocyanine oder auch Karminrot oder Elemente wie z.B. Yttrium oder Antimon. Effektpigmente enthaltend diese Schichten zeigen eine hohe Farbenvielfalt in Bezug auf ihre Körperfarbe und können in vielen Fällen eine winkelabhängige Änderung der Farbe (Farbflop) durch Interferenz zeigen.

Die äußere Schicht auf dem Träger ist in einer bevorzugten Ausführungsform ein hochbrechendes Metalloxid. Diese äußere Schicht kann zusätzlich auf den oben genannten Schichtpaketen oder bei hochbrechenden Trägern Teil eines Schichtpaketes sein und z.B. aus TiO₂, Titansuboxiden, Fe₂O₃, Fe₃O₄, SnO₂, ZnO, ZrO₂, Ce₂O₃, CoO, Co₃O₄, V₂O₅, Cr₂O₃ und/oder Mischungen davon, wie zum Beispiel Ilmenit oder Pseudobrookit, bestehen. TiO₂ ist besonders bevorzugt, ferner Fe₂O₃. Sofern die Trägerplättchen mit TiO₂ beschichtet sind liegt das TiO₂ vorzugsweise in der Rutilmodifikation vor, ferner in der Anatasmodifikation.

Besonders bevorzugte Effektpigmente besitzen folgenden Aufbau:
Substratplättchen + (SiO₂) + TiO₂ (Rutil)
Substratplättchen + (SiO₂) + Fe₂O₃
Substratplättchen + (SiO₂) + Fe₃O₄
Substratplättchen + (SiO₂) + SiO₂ + TiO₂ (Rutil)
Substratplättchen + (SiO₂) + TiO₂ (Rutil) + SiO₂ + TiO₂ (Rutil)
Substratplättchen + (SiO₂) + TiO₂ (Anatas) + SiO₂ + TiO₂ (Anatas)
Substratplättchen + (SiO₂) + TiO₂/Fe₂O₃ + SiO₂ + TiO₂ + TiO₂/Fe₂O₃
Substratplättchen + (SiO₂) + TiO₂/Fe₂O₃ + SiO₂ + TiO₂/Fe₂O₃.

Optional kann auf das Substratplättchen eine SiO₂-Schicht als Schutzschicht aufgebracht werden. Sofern es sich bei dem Substratplättchen um ein Glasplättchen handelt, empfiehlt sich häufig die Aufbringung einer SiO₂-Schicht um das Glasplättchen bei der nasschemischen Beschichtung gegen Auslaugung zu schützen.

In dieser Patentanmeldung bedeutet "hochbrechend" ein Brechungsindex von ≥ 1,8, während "niedrigbrechend" ein Brechungsindex von < 1,8 bedeutet.

Die Dicke der Metalloxid-, Metalloxidhydrat-, Metallsuboxid-, Metall-, Metallfluorid-, Metallnitrid-, Metalloxynitridschichten oder einer Mischung daraus beträgt üblicherweise 3 bis 300 nm und im Falle der Metalloxid-, Metalloxidhydrat-, Metallsuboxid-, Metallfluorid-, Metallnitrid-, Metalloxynitridschichten oder einer Mischung daraus vorzugsweise 20 bis 200 nm. Die Dicke der Metallschichten beträgt vorzugsweise 4 bis 50 nm.

Die Größe der Träger und damit der Effektpigmente ist an sich nicht kritisch. Plättchenförmige Träger und/oder mit einer oder mehreren transparenten oder semitransparenten Metalloxid-, Metall- oder Metallfluoridschichten beschichtete plättchenförmige Träger weisen in der Regel eine Dicke zwischen 0,05 und 5 µm, insbesondere zwischen 0,1 und 4,5 µm auf. Die Ausdehnung in der Länge bzw. Breite beträgt üblicherweise zwischen 1 und 500 µm, vorzugsweise zwischen 2 und 200 µm und insbesondere zwischen 2 und 100 µm.

Ganz besonders bevorzugte Effektpigmente besitzen folgenden Schichtaufbau:
Glimmerplättchen + TiO₂
Glimmerplättchen + TiO₂ + Fe₂O₃
Glimmerplättchen + TiO₂/Fe₂O₃
Glimmerplättchen + Fe₂O₃
Glimmerplättchen + Fe₃O₄
Glimmerplättchen + Titanoxynitride
Glimmerplättchen + TiO₂ + SiO₂ + TiO₂
Glimmerplättchen + TiO₂/Fe₂O₃
Glimmerplättchen + TiO₂/Fe₂O₃ + SiO₂ + TiO₂
Glimmerplättchen + TiO₂/Fe₂O₃ + SiO₂ + TiO₂/Fe₂O₃
Glimmerplättchen + TiO₂/Fe₂O₃ + SiO₂ + TiO₂ + TiO₂/Fe₂O₃
Glimmerplättchen + TiO₂ + SiO₂ + TiO₂/Fe₂O₃
Glimmerplättchen + TiFe₂O₅
Al₂O₃-Plättchen + TiO₂
Al₂O₃-Plättchen + Fe₂O₃
Al₂O₃-Plättchen + Titanoxynitride
SiO₂-Plättchen + TiO₂
SiO₂-Plättchen + Fe₂O₃
SiO₂-Plättchen + Titanoxynitride
Glasplättchen + TiO₂
Glasplättchen + Fe₂O₃
Glasplättchen + TiO₂ + Fe₂O₃
Glasplättchen + SiO₂ + TiO₂
Glasplättchen + SiO₂ + Fe₂O₃
Glasplättchen + SiO₂ + TiO₂ + Fe₂O₃
Glasplättchen + SiO₂ + TiO₂ + SiO₂
Glasplättchen + TiO₂ + SiO₂ + TiO₂
Glasplättchen + TiO₂/Fe₂O₃
Glasplättchen + TiO₂/Fe₂O₃ + SiO₂ + TiO₂
Glasplättchen + TiO₂/Fe₂O₃ + SiO₂ + TiO₂/Fe₂O₃
Glasplättchen + TiO₂/Fe₂O₃ + SiO₂ + TiO₂ + TiO₂/Fe₂O₃
Glasplättchen + TiO₂ + SiO₂ + TiO₂/Fe₂O₃
Glasplättchen + TiFe₂O₅
Glasplättchen + SiO₂ + TiO₂/Fe₂O₃
Glasplättchen + SiO₂ + TiO₂/Fe₂O₃ + SiO₂ + TiO₂
Glasplättchen + SiO₂ + TiO₂/Fe₂O₃ + SiO₂ + TiO₂/Fe₂O₃
Glasplättchen + SiO₂ + TiO₂/Fe₂O₃ + SiO₂ + TiO₂ + TiO₂/Fe₂O₃
Glasplättchen + SiO₂ + TiO₂ + SiO₂ + TiO₂/Fe₂O₃
Glasplättchen + SiO₂ + TiFe₂O₅
Fe₂O₃-Plättchen + TiO₂
Fe₂O₃-Plättchen + Fe₂O₃
Fe₂O₃-Plättchen + Titanoxynitride
Metallplättchen (gegebenenfalls passiviert) + TiO₂
Metallplättchen (gegebenenfalls passiviert) + Fe₂O₃.

TiO₂/Fe₂O₃ bedeutet, dass TiO₂ und Fe₂O₃ in einer Schicht als Gemisch und/oder als Mischoxid in Form des Pseudobrookits vorliegen. Das Pseudobrookit bzw. die TiO₂/Fe₂O₃-Mischschicht kann gegebenenfalls auch noch mit Al₂O₃ dotiert sein.

Geeignete Effektpigmente sind kommerziell erhältlich, z.B. von der Firma BASF Corp. beispielsweise unter den Markennamen Firemist^{®}, Rightfit™, Magnapearl^{®}, von der Firma Merck KGaA unter den Markennamen Iriodin^{®}, Miraval^{®}, Xirallic^{®} und Colorstream^{®}.

In dieser Patentanmeldung werden unter Effektpigmente solche verstanden, wie sie in Anspruch 2 gelistet sind.

Zur zusätzlichen Erhöhung der Licht-, Wasser- und Wetterstabilität der Pigmente empfiehlt es sich häufig, in Abhängigkeit vom Einsatzgebiet, das Effektpigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung wird die chemische Stabilität weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendungsmedien können funktionelle Beschichtungen aus Al₂O₃ oder ZrO₂ oder deren Gemische bzw. Mischphasen auf die Pigmentoberfläche aufgebracht werden. Weiterhin sind organische, bzw. organisch/anorganisch kombinierte Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjeé, Philips Technical Review, Vol. 44, No. 3, 81 ff. und P.H. Harding J.C. Berg, J. Adhesion Sci. Technol. Vol. 11 No. 4, S.471-493.

Der Anteil der plättchenförmigen Effektpigmente in den Pigmentgranulaten liegt im Allgemeinen zwischen 60 - 90 Gew.%, vorzugsweise zwischen 70-85 Gew.%, ganz besonders bevorzugt zwischen 75 - 80 Gew.% bezogen auf das Granulat. Die optimalen Anteile sind für den Fachmann leicht zu ermitteln und hängen im wesentlichen von der Teilchengröße der eingesetzten Effektpigmente, dem Formfaktor der Effektpigmente und der Art des Pigmentaufbaus ab.

Besonders bevorzugte erfindungsgemäße Pigmentgranulate enthalten
60 - 90 Gew.% eines oder mehrerer Effektpigmente
5 - 30 Gew.% Polymerpartikel
1 - 30 Gew.% Haftvermittler
0,1-10 Gew.% Additive
0,01-5 Gew.% Antioxidans
bezogen auf die Gesamtrezeptur der Pigmentgranulate, wobei der Gesamtanteil aller Komponenten im Granulat ≤ 100 Gew.% beträgt.

Erstrebenswert ist ein möglichst hoher Anteil an Effektpigmenten bzw. ein möglichst geringer Anteil an Polymerpartikel um möglichst wenig Fremdmaterial in dem zu pigmentierenden Anwendungsmedium, z.B. einem Kunststoff, einzubringen. Es muss jedoch genügend Trägermaterial verwendet werden, um die gewünschten Eigenschaften der erfindungsgemäßen Pigmentgranulate, wie z.B. Nicht-Stauben, verbesserte Rieselfähigkeit oder höherer Durchsatz bei der Masterbatch-Herstellung, zu gewährleisten. Dazu müssen die Polymerteilchen nicht nur mit dem Effektpigment umhüllt sein, sondern sie müssen auch miteinander zu einem gut rieselfähigen groben "Pulver" verklebt sein.

Die gefährliche Selbsterhitzung von Pigmentgranulaten enthaltend ein Polymer und ein Effektpigment wird durch die Zugabe eines Antioxidans reduziert, so dass eine Klassifizierung als Gefahrgut nach Prüfverfahren N.4 beschrieben im Kapitel 33.3.1.6 der Recommendations on the Transport of Dangerous Good, Manual of Tests and Criteria, nicht erforderlich ist.

Alle dem Fachmann bekannten Antioxidantien sind für die vorliegende Erfindung geeignet, sofern sie mit dem Haftvermittler verträglich sind. Die Antioxidantien behindern bzw. verhindern die thermisch induzierte Oxidation der Haftvermittler in den Anwendungsmedien, wie z.B. in Lacken und Kunststoffen. Sie verhindern die Bildung von freien Radikalen, welche durch Erhitzen in Anwesenheit von Sauerstoff gebildet würden und verhindern gleichzeitig die Verfärbung und/oder Veränderung der mechanischen Eigenschaften der Anwendungsmedien, wie z.B. Kunststoffe, Lacke.

Bevorzugte Antioxidantien sind ausgewählt aus der Gruppe der
- Lacton/Phospit-Mischungen
- Lacton/Phospit/Phenol-Mischungen
- Phenol/Phosphit-Mischungen
- Phosphite
- Phenole.

Besonders bevorzugte Antioxidantien sind ausgewählt aus der Gruppe
- Tetrakis [methylen-3-(3, 5-di-tert.-butyl-4-hydroxyphenyl -propionat)] methan
- n-Octadecyl-β-(4-hydroxy-3,5-di-tert.-butyl-phenyl)-propionat
- N, N'-Bis (3,5-di-butyl-4-hydroxyl-phenylpropionyl) hydrazin
- N, N'-Hexan-1, 6-diylbis [3-(3, 5-di-tert.-butyl-4-hydroxyphenyl) propionamid]
- Tris(3,5-di-tert.-butyl-4-hydroxybenzyl)isocyanurat
- Tri-(2, 4-di-tert-butyl-phenyl)-phosphit
- Bis (2.4-di-t-butylphenyl)pentaerythritol diphosphit
- Triphenylphosphit
- Trisnonylphenylphosphit
- Diphenylisodecylphosphit
- Diisodecyl phenylphosphat
- Diisooctyl phenylphosphit
- Diphenyl isooctylphosphat
- Phosphorsäure-Alkyl/Aryl-Ester
- Bisphenol A Phosphit
- Dilauryl thiodipropionat
- Distearyl thiodipropionat
- Butyl- und Octyl- Diphenylamin
- Dinonyl Diphenylamin
- 4,4'-Bis (alpha, alpha-dimethylbenzyl)diphenylamin
- 4,4'-Dioctyl Diphenylamin
- Gemisch aus Tetrakis [methylene-3-(3,5-di-tert-butyl-4-hydroxyphenyl - propionat)] methan und Tri-(2, 4-di-tert-butyl-phenyl)-phosphit (Gewichtsverhältnis 1 : 1)
- Gemisch aus Tetrakis [methylene-3-(3,5-di-tert-butyl-4-hydroxyphenyl-propionat)] methan und Tri-(2, 4-di-tert-butyl-phenyl)-phosphit (Gewichtsverhältnis 1 : 2)
- Gemisch aus Tetrakis [methylene-3-(3,5-di-tert-butyl-4-hydroxyphenyl-propionat)] methan und Tri-(2, 4-di-tert-butyl-phenyl)-phosphit (Gewichtsverhältnis 1 : 3)
- Gemisch aus Tetrakis [methylene-3-(3,5-di-tert-butyl-4-hydroxyphenyl-propionat)] methan und Tri-(2, 4-di-tert-butyl-phenyl)-phosphit (Gewichtsverhältnis 1 : 4)
- Gemisch aus n-Octadecyl-β-(4-hydroxy-3,5-di-tert-butyl-phenyl)-propionat und Tri-(2, 4-di-tert-butyl-phenyl)-phosphit (Gewichtsverhältnis 1 : 1).

Antioxidantien mit dieser chemischen Zusammensetzung sind im Handel erhältlich, z.B. von der Fa. Ciba Specialty Chemicals:
IRGANOX^{®} 1010, IRGANOX^{®} 1076, IRGANOX^{®} 245: Phenole
IRGANOX^{®} B 225: Phenol/Phosphit -Mischung
IRGANOX^{®} XP 620: Phenol/Phosphit/Phenol -Mischung
IRGAFOS^{®} 168, IRGASFOS^{®} 126: Phosphite
IRGAFOS^{®} XP 60: Lacton/Phosphit-Mischung.

Die erfindungsgemäßen Pigmentgranulate enthalten vorzugsweise 0,1 -5 Gew.%, insbesondere 0,1 - 1,5 Gew.%, ganz besonders bevorzugt 0,5 - 1 Gew.% an Antioxidans bezogen auf das Pigmentgranulat.

In einer weiteren Ausführungsform können die erfindungsgemäßen Pigmentgranulate weitere Additive und/oder Hilfsstoffe enthalten, wie sie für den Einsatz in Anwendungsmedien aus den Bereichen Farben, Lacke, Pulverlacke, Kunststoffe, üblich sind. Derartige Additive und/oder Hilfsstoffe können Gleitmittel, Trennmittel, Stabilisatoren, Antistatika, Beschleuniger, Flammschutzmittel, Farbmittel, Flexibilisatoren und Weichmacher (z.B. Diisononylphthalat), Treibmittel, Antioxidantien, UV-Absorber, organische/anorganische Füllstoffe, Phenolderivate, Tenside sein. Einen Überblick über die einsetzbaren Additive und Hilfsstoffe findet sich in Saechtling, Kunststoff Taschenbuch, 27. Ausgabe, Carl Hanser Verlag oder gibt R. Wolf in "Plastics, Additives" in Ullmann's, Encyclopedia of Industrial Chemistry, Internetedition, 7th Edition, 2003.

Zur Verbesserung der Benetzung und Gleiteigenschaften der erfindungsgemäßen Pigmentgranulate sind insbesondere Gleitmittel und Netzmittel basierend auf Gemischen von Fettsäuren/Fettsäureestern und Pflanzenölen geeignet, wie z.B. das im Handel erhältliche Polytrend 719 OT 0005-BON (Degussa Colortrend B.V.).

Bevorzugt enthalten die erfindungsgemäßen Pigmentgranulate als Additive Ethylenglykoldimethylether, vorzugsweise mit Molmassen von 200-2000 g/mol und einem Siedepunkt von 200 - 300 °C. Geeignete Polyglykole sind im Handel erhältlich, z. B. Polyglykol DME 200, DME 250, DME 500, DME 1000 oder DME 2000 von der Fa. Clariant.

Die erfindungsgemäßen Pigmentgranulate lassen sich relativ leicht herstellen.

So kann gemäß dem erfindungsgemäßen Verfahren z.B. das bzw. die Effektpigment(e) vorgelegt werden und mit mindestens einem Haftvermittler, ein oder mehreren Polymerpartikeln und mindestens einem Antioxidans und ggf. Additiven gemischt werden. Diese Verfahrensvariante ist bevorzugt.

Es ist aber auch möglich, dass das bzw. die Effektpigment(e), die Polymerpartikel, das Antioxidans und ggf. Additive in den bzw. die Haftvermittler eindispergiert werden, und dass das Lösungsmittel der Haftvermittler abgedunstet wird.

Bevorzugtes Lösemittel in den verwendeten Haftvermittlern ist Wasser, ferner mit Wasser mischbare organische Lösmittel, z.B. Ethanol, Methanol.

In einer weiteren Ausführungsform des erfindungsgemäßen Verfahrens können der Mischung aus plättchenförmigem Effektpigment, Haftvermittler, Antioxidans und Polymerpartikel bei der Verarbeitung von Lacken und Kunststoffen übliche Additive zugesetzt werden.
Gegenstand der Erfindung ist auch ein Verfahren zur Herstellung der erfindungsgemäßen Granulate.

Die erfindungsgemäßen Pigmentgranulate zeichnen sich dadurch aus, dass sie leicht dispergierbar sind im Anwendungsmedium, insbesondere leicht aufschmelzbar sind im Kunststoff.

Zur Herstellung der Granulate wird die feuchte Präparation aus einem oder mehreren Effektpigmenten, einem oder mehreren Polymerpartikeln, Haftvermittler, Antioxidans und ggf. Additiven stranggepresst oder auf anderen dem Fachmann bekannten Wegen in eine kompakte Teilchenform verdichtet, z. B. durch Tablettieren, Brikettieren, Pelletieren, Granulieren, Sprühgranulieren, Wirbelbettgranulieren oder Extrudieren, und anschließend unter genau kontrollierten Bedingungen getrocknet. Während des Trocknungsvorgangs wird kontinuierlich der Lösemittelgehalt des Granulats reduziert.

Der Trocknungsprozess findet in Abhängigkeit vom verwendeten Lösemittel im Haftvermittler bei Temperaturen von 60 bis 150 °C statt, vorzugsweise bei 60 bis 120 °C, und kann ggf. unter reduziertem Druck, vorzugsweise bei 80 - 100 mbar, erfolgen. Die Dauer der Trocknung hängt von der Chargengröße der zu trocknenden Präparation, dessen Durchsatz während der Trocknung und vom verwendeten Lösemittel ab, beträgt aber in der Regel 0,5 - 24 h, vorzugsweise 1 - 18 h. Zuletzt wird das Granulat gegebenenfalls klassiert.

Unter dem Begriff "Granulat" sind hier alle möglichen festen Teilchenformen, wie z.B. Pellets, Pearlets, Chips, Briketts, Tabletten, Würstchen, etc., zu verstehen. Die Teilchengrößen der Granulate liegen im Bereich von 0,5 bis 150 mm, vorzugsweise 0,5 bis 20 mm, insbesondere 0,5 bis 6 mm.

Die Bestimmung des Lösemittelgehalts der Granulate bei der Herstellung erfolgt, indem man mit einem auf Infrarotbasis arbeitenden Moisture Analyzer, Typ MA 30 der Fa. Sartorius die Restfeuchte bestimmt. Dabei wird nach vorhergehender Kalibrierung nach Bedienungsanleitung der Wassergehalt bestimmt. Der Moisture Analyzer, Typ MA 30, entzieht dabei der Prüfungssubstanz, durch Erwärmung mit Infrarotstrahlung, die flüchtigen Bestandteile und setzt den gemessenen Gewichtsverlust in Relation zur Ausgangsmasse.

Bei der Bestimmung des Wassergehaltes mit dem Moisture Analyzer, Typ MA 30 der Fa. Sartorius werden folgende Parameter zur Ergebnisfindung gewählt:

| | |
|---|---|
| Einwaage: | 4-5 g ungemahlene Prüfsubstanz |
| Temperatur: | 135-160 °C |
| Zeiteinstellung: | 12-20 Minuten |
| Ergebnisanzeige: | 0-100 % (Feuchtegehalt). |

Die Verwendung der erfindungsgemäßen Pigmentgranulate zur direkten Pigmentierung von Kunststoffen und Lacken und zur Herstellung von Masterbatches ist ebenfalls Gegenstand der vorliegenden Erfindung.

Die direkte Einarbeitung der erfindungsgemäßen Pigmentgranulate in den Kunststoff erfolgt, indem man das Kunststoffgranulat und/oder -pulver mit dem Pigmentgranulat mischt. Anschließend wird der mit den erfindungsgemäßen Pigmentgranulaten pigmentierte Kunststoff unter Wärmeeinwirkung verformt. Weiterhin können dem Kunststoffgranulat und/oder -pulver bei der Einarbeitung der Pigmentgranulate gegebenenfalls weitere Additive und Pigmente zugesetzt werden.

Die Herstellung der Kunststoffgranulate und/oder Kunststoffpulver/Pigment-Mischung erfolgt in der Regel so, dass in einem geeigneten Mischer, z.B. Taumel- oder Schnellmischer, das Kunststoffgranulat und/oder -pulver vorgelegt, mit eventuellen Zusätzen benetzt wird und danach die erfindungsgemäßen Pigmentgranulate zugesetzt und untergemischt werden.

Für den Einsatz der erfindungsgemäßen Pigmentgranulate eignen sich eine ganze Reihe von Kunststoffen, insbesondere thermoplastische Kunststoffe. Bevorzugt handelt es sich bei den Kunststoffen um unpolare (olefinische) Kunststoffe. Beispiele für geeignete Kunststoffe finden sich z.B. in Saechtling, Kunststoff Taschenbuch, 27. Ausgabe, Carl Hanser Verlag.

Weiterhin können die erfindungsgemäßen Pigmentgranulate auch Einsatz finden in Pulverlacken.

Insbesondere für die Herstellung von Masterbatches lassen sich die erfindungsgemäßen Pigmentgranulate vorteilhaft einsetzen. Auf diese Weise lassen sich auch die höchsten Anforderungen an die Pigmentdispergierung erfüllen. Die Herstellung der Masterbatches kann dabei sowohl kontinuierlich als auch diskontinuierlich erfolgen, vorzugsweise kontinuierlich, z.B. durch Einsatz von Ein- oder Doppelschneckenextrudern. Vorteilhaft bei der Herstellung von Masterbatches ist die Verwendung von Pulvern oder Grieß der jeweiligen Kunststoffe. Bei Einsatz der erfindungsgemäßen Pigmentgranulate auf einem Doppelschneckenextruder kann der Durchsatz je nach Bedingungen mindestens um den Faktor 2-5 gegenüber dem unpräparierten Effektpigment gesteigert werden. Weiterhin lassen sich unter Einsatz der erfindungsgemäßen Pigmentgranulate auf einem Einschneckenextruder Masterbatches mit einem Pigmentanteil von bis zu 50 Gew. %, bezogen auf den Masterbatch, herstellen.

Bei entsprechender Auswahl des Trägermaterials sind sowohl polare als auch unpolare Kunststoffe als Masterbatch-Grundlage geeignet. Es gibt z.B. Pfropfcopolymere, die als Trägermaterial in erfindungsgemäßen Effektpigmentpräparationen sowohl in polaren als auch in unpolaren (olefinischen) Kunststoffen eingesetzt werden können. Beispielsweise eignen sich Ethylen-Acrylsäure-Copolymere sowohl für den Einsatz in polaren als auch für den Einsatz in unpolaren Kunststoffen.

Gegenstand der vorliegenden Erfindung ist weiterhin der Einsatz der erfindungsgemäßen Pigmentgranulate in Masterbatch-Anwendungen. Hierbei können bei der Herstellung des Masterbatches die erfindungsgemäße Pigmentgranulate in Mischung mit Kunststoffpulvern oder in Mischung mit Kunststoff-Granulaten eingesetzt werden.

Die nachfolgenden Beispiele sollen die Erfindung näher erläutern, ohne sie jedoch zu begrenzen.

### I. Anwendungsbeispiele

### Beispiel 1: Herstellung eines oxidationsstabilen pigmentierten Granulats (auf Basis LLDPE-Kunststoffpulver)

Die im Beispiel verwendete Wachsemulsion
Ultralube V-06070480(Produkt der Fa. KEIM-ADDITEC Surface GmbH) bestehend aus
- 42 Gew.% oxidiertem LDPE-Wachs (Schmelzpunkt des Wachses 110-125 °C),
- 5 Gew.% Emulgator auf Basis ethoxylierter Fettalkohol
- 52,79 Gew.% Wasser,
- 0,21 % des phenolischen Antioxidants Irganox 1010 (Fa. Ciba Specialty Chemicals
weist nachfolgende Kennwerte auf:
Polymer-Teilchengröße : 60-80 nm
pH-Wert: 6-7
lonigenität: non-ionic.
Diese LDPE-Wachsemulsion dient der Herstellung einer LDPE-Wachsemulsion/Additiv-Vormischung.

### Herstellung Vormischunct Nr. 1

In Beispiel 1 werden 238 g Ultralube V-06070480 und 120 g Polyglykol DME 500 (Polyethylenglykoldimethylether 500 der Fa. Clariant), welches zuvor 1:1 mit Wasser verdünnt wird, unter einem Laborrührwerk der Fa. IKA; Rührerbezeichnung- DZM 20, bei 1200-1500 U/min, 30 min mit einem 4-Flügelrührer, homogenisiert.

### Herstellung des Granulats

Zur Herstellung des Granulates ist eine gute Durchmischung zu gewährleisten. Die Mischung wird mit Hilfe eines Eirich R02 Mischers hergestellt.

700 g Iriodin^{®} 100 (Perlglanzpigment der Fa. Merck, mit TiO₂ beschichtetes Glimmerpigment) werden im Mischbehälter vorgelegt, anschließend 145 g Escorne LL 6201 RQ (= LLD-PE-Kunststoff-Pulver / LLD = linear low density;der Fa. ExxonMobil) mit der Teilchengröße 0,8-1,2 mm zudosiert und dann langsam 358 g Vormischung Nr. 1, zugegeben und die Mischung 2 min. in Reglerstellung 1 (Teller/Wirbler) homogen vermischt.
Die so hergestellte feuchte Pigment / LLDPE-Polymer / LD-PE-Haftvermittler/ Additiv-Mischung, wird auf einem Eirich Pelletierteller TR 04 pelletiert. Dort wird auch die Größenverteilung eingestellt. Hierzu werden 200 g frisch hergestelltes Granulat auf den Teller gegeben und bei 200-350 U/min und einem Neigungswinkel von 30-40° die Sollkorngröße eingestellt. Ist die Sollkorngröße eingestellt, wird mit dem portionsweisen Eintrag der Gesamtmenge, des wasserfeuchten Pigment / LLDPE-Polymer / LDPE-Haftvermittler / Additiv-Batches, begonnen.

Die Sollgröße soll im vorgegeben Versuch auf 2 +/-0,5 mm anwachsen. Hierbei werden Portionen zwischen 50-100 g eingetragen, welche innerhalb kurzer Zeit zugegeben werden können (1 kg ca. 10-15 min). Gröbere Aggregate sammeln sich in der Mitte der beim Pelletieren entstehenden "Materialfluß-Niere". Diese werden mit einer kleinen Schaufel aufgenommen, von Hand zerkleinert und wieder zugegeben.

Die feuchte, granulierte Mischung wird bei 40 - 60 °C in einem Wirbelschichttrockner 50-70 min. getrocknet. Die so hergestellten Granulate werden über ein Sieb der Maschenweite 3 mm schutzklassiert.

Das erhaltene Pigmentgranulat ist abriebfest, formstabil und weist eine außergewöhnliche Reinheit des erzeugten Perleffektes auf.

Die erhaltenen Granulate lassen sich in PE/PP-Pulvern bzw. PE/PP-Granulaten, ohne Probleme zu einem Masterbatch, mit einem

Pigmentgehalt von 40-50 % auf einem Doppelschneckenextruder verarbeiten.

### Beispiel 2: Herstellung eines oxidationsstabilen Kunststoff-Granulats (auf Basis LLDPE-Kunststoffkern)

### Herstellung Vormischung Nr. 2

238 g Ultralube V-06070480 mit 120 g Polyglycol DME 500 (Polyethylenglykoldimethylether 500 der Fa. Clariant), welches zuvor 1:1 mit Wasser verdünnt wird, wird unter einem Laborrührwerk der Fa. IKA; Rührerbezeichnung- DZM 20, bei 1200-1500 U/min, 30 min mit einem 4-Flügelrührer, homogenisiert.

### Herstellung des Granulats

Zur Herstellung des Granulates ist eine gute Durchmischung zu gewährleisten. Die Mischung wird mit Hilfe eines Eirich R02 Mischers hergestellt.

700 g Iriodin^{®} 100 (Perlglanzpigment der Fa. Merck, mit TiO₂ beschichtetes Glimmerpigment) werden im Mischbehälter vorgelegt, anschließend 145 g Escorne LL 6201 XR (= LLD-PE-Kunststoff-Pellet/LLD=linear low density; der Fa. ExxonMobil) mit der Teilchengröße 1,5-1,7 mm zudosiert (die Teilchengröße wird durch Unterwassergranulation von durchschnittlich 3-4 mm auf 1,5-1,7 mm umgeschmolzen. Durch diese Maßnahme soll ein Verstopfen der Düsen des Extruders verhindert werden) und dann langsam 358 g Vormischung Nr. 2, zugegeben und die Mischung 2 min. in Reglerstellung 1 (Teller/Wirbler) homogen vermischt. Die so hergestellte feuchte Pigment / LLDPE-Polymer /LDPE-Haftvermittler / Additiv-Präparation, wird auf einem Eirich Pelletierteller TR 04 pelletiert. Dort wird auch die Größenverteilung eingestellt.

Hierzu werden 200 g frisch hergestelltes Granulat auf den Teller gegeben und bei 200-350 U/min und einem Neigungswinkel von 30-40° die Sollkorngröße eingestellt. Ist die Sollkorngröße eingestellt, wird mit dem portionsweisen Eintrag der Gesamtmenge, des wasserfeuchten Pigment/LLDPE-Polymer/LDPE-Haftvermittler/Additiv-Batches, begonnen.

Die Sollgröße soll im vorgegeben Versuch auf 3 ±0,5 mm anwachsen. Hierbei werden Portionen zwischen 50-100 g eingetragen, welche innerhalb kurzer Zeit zugegeben werden können (1 kg ca. 10-15 min). Gröbere Aggregate sammeln sich in der Mitte der beim Pelletieren entstehenden "Materialfluß-Niere". Diese werden mit einer kleinen Schaufel aufgenommen, von Hand zerkleinert und wieder zugegeben.

Die feuchte, granulierte Mischung wird bei 40 - 60 °C in einem Wirbelschichttrockner 50-70 min. getrocknet. Die so hergestellten Granulate werden über ein Sieb der Maschenweite 5 mm schutzklassiert.

Das erhaltene Pigmentgranulat ist abriebfest, formstabil und weist eine außergewöhnliche Reinheit des erzeugten Perleffektes auf.
Die erhaltenen Granulate lassen sich in PE/PP-Pulvern bzw. PE/PP-Granulaten ohne Probleme zu einem Masterbatch mit einem Pigmentgehalt von 40-50 % auf einem Doppelschneckenextruder verarbeiten.

### Vergleichsbeispiel 1

### Beispiel 3: Herstellung eines nicht-oxidationsstabilen pigmentierten Kunststoff-Granulats (auf Basis LLDPE-Kunststoffgranulat)

### Die im Beispiel verwendete Wachsemulsion

Ultralube E-668 H(Produkt der Fa. KEIM-ADDITEC Surface GmbH) bestehend aus
- 35 Gew.% oxidiertem PP-Wachs-(Schmelzpunkt des Wachses-154 °C),
- 5 Gew.% Emulgator auf Basis ethoxylierter Fettalkohol
- 60 Gew.% Wasser,
weist nachfolgende Kennwerte auf:
- Polymer-Teilchengröße : <100 nm,
- pH-Wert: 8-9
- lonigenität: non-ionic.

Diese LDPE-Wachsemulsion dient der Herstellung einer LDPE-Wachs-Emulsion/Additiv-Vormischung.

### Herstellung Vormischung Nr. 3

Im Beispiel werden 285 g Ultralube E-668-H (Fa. Keim Additec) mit 120 g Polyglycol DME 500 (Polyethylenglykoldimethylether 500 der Fa. Clariant; dient als Additiv), welches zuvor 1:1 mit Wasser verdünnt wird, unter einem Laborrührwerk der Fa. IKA; Rührerbezeichnung DZM 20; bei 1200-1500 U/min, 30 min mit einem 4-Flügelrührer, homogenisiert.

### Herstellung des Granulats

700 g Iriodin^{®} 100 (Perlglanzpigment der Fa. Merck, mit TiO₂ beschichtetes Glimmerpigment) werden im Mischbehälter vorgelegt, anschließend 145 g Escorne LL 6201 XR (= LLD-PE-Kunststoff-Pellet /LLD =linear low density der Fa. ExxonMobil) Teilchengröße 1,5-1,7 mm zudosiert (Die Teilchengröße wird durch Unterwassergranulation von durchschnittlich 3-4 mm auf 1,5-1,7 mm umgeschmolzen.) und dann langsam 405 g Vormischung Nr. 3 zugegeben und die Mischung 2 min. in Reglerstellung 1 (Teller/Wirbler) homogen vermischt.

Die so hergestellte feuchte Pigment / LLDPE-Polymer / PP-Haftvermittler / Additiv-Präparation, wird auf einem Eirich Pelletierteller TR 04 pelletiert. Dort wird auch die Größenverteilung eingestellt. Hierzu werden 200 g frisch hergestelltes Granulat auf den Teller gegeben und bei 200-350 U/min und einem Neigungswinkel von 30-40° die Sollkorngröße eingestellt. Ist die Sollkorngröße eingestellt, wird mit dem portionsweisen Eintrag der Gesamtmenge, des wasserfeuchten Pigment/LLDPE-Polymer/PP-Haftvermittler/Additiv-Batches, begonnen.

Die Sollgröße soll im vorgegeben Versuch auf 3 +/-0.5 mm anwachsen. Hierbei werden Portionen zwischen 50-100 g eingetragen, welche innerhalb kurzer Zeit zugegeben werden können (1 kg ca. 10-15 min). Gröbere Aggregate sammeln sich in der Mitte der beim Pelletieren entstehenden "Materialfluß-Niere". Diese werden mit einer kleinen Schaufel aufgenommen, von Hand zerkleinert und wieder zugegeben.

Die feuchte, granulierte Mischung wird bei 40 - 60 °C in einem Wirbelschichttrockner 50-70 min. getrocknet. Die so hergestellten Granulate werden über ein Sieb der Maschenweite 5 mm schutzklassiert. Das erhaltene Pigmentgranulat ist abriebfest, formstabil und weist eine außergewöhnliche Reinheit des erzeugten Perleffektes auf.

Die erhaltenen Granulate lassen sich in PE/PP-Pulvern bzw. PE/PP-Granulaten ohne Probleme zu einem Masterbatch mit einem Pigmentgehalt von 40-50 % auf einem Doppelschneckenextruder verarbeiten.

### Vergleichsbeispiel 2

### Beispiel 4: Herstellung eines nicht-oxidationsstabilen pigmentierten Kunststoff-Granulats (auf Basis LLDPE-Kunststoffpulver)

Die im Beispiel verwendete Mikrowachsdispersion
Ultralube MD 2011 (Produkt der Fa. KEIM-ADDITEC Surface GmbH) bestehend aus
- 40 Gew.% oxidiertem HDPE-Wachs-(Schmelzpunkt des Wachses 128 °C)
- 5 Gew.% Emulgator auf Basis ethoxylierter Fettalkohol
- 55 Gew.% Wasser,
weist nachfolgende Kennwerte auf:
- Polymer-Teilchengröße : 0,4 - 4 µm,
- pH-Wert: 3-4
- lonigenität: non-ionic.

Diese HDPE-Mikrowachsdispersion dient der Herstellung einer HDPE-Mikrowachsdispersion / Additiv- Vormischung.

### Herstellung Vormischung Nr. 4

Im Beispiel werden aus 250 g Ultralube MD 2011 mit 120 g Polyglycol DME 500 (Polyethylenglykoldimethylether 500 der Fa. Clariant; dient als Additiv), welches zuvor 1:1 mit Wasser verdünnt wird, unter einem Laborrührwerk der Fa. IKA; Rührerbezeichnung- DZM 20; bei 1200-1500 U/min, 30 min mit einem 4-Flügelrührer, homogenisiert.

### Herstellung des Granulats

Zur Herstellung des Granulates ist eine gute Durchmischung zu gewährleisten. Die Mischung wird mit Hilfe eines Eirich R02 Mischers hergestellt.

700 g Iriodin^{®} 100 (Perlglanzpigment der Fa. Merck, mit TiO₂ beschichtetes Glimmerpigment) werden im Mischbehälter vorgelegt, anschließend 145 g Escorne LL 6201 RQ (= LLD-PE-Kunststoff-Pulver / LLD = linear low density; der Fa. ExxonMobil), mit der Teilchengröße 0,8-1,2 mm, zudosiert und dann langsam 370 g Vormischung Nr. 4, zugegeben und die Mischung homogen vermischt (Teller/Wirbler).

Die so hergestellte feuchte Pigment/LLDPE-Kunststoff-Pulver/HD-PE-Haftvermittler/Additiv-Mischung, wird auf einem Eirich Pelletierteller TR 04 pelletiert. Dort wird auch die Größenverteilung eingestellt. Hierzu werden 200 g frisch hergestelltes Granulat auf den Teller gegeben und bei 200-350 U/min und einem Neigungswinkel von 30-40° die Sollkorngröße eingestellt. Ist die Sollkorngröße eingestellt, wird mit dem portionsweisen Eintrag der Gesamtmenge, des wasserfeuchten Pigment/Polymer/ HDPE-Haftvermittler / Additiv-Batches begonnen. Die Sollgröße soll im vorgegeben Versuch auf 2 ± 0,5 mm anwachsen. Hierbei werden Portionen zwischen 50-100 g eingetragen, welche innerhalb kurzer Zeit zugegeben werden können (1 kg ca. 10-15 min). Gröbere Aggregate sammeln sich in der Mitte der beim Pelletieren entstehenden "Materialfluß-Niere". Diese werden mit einer kleinen Schaufel aufgenommen, von Hand zerkleinert und wieder zugegeben. Die feuchte, granulierte Mischung wird bei 40 - 60 °C, in einem Wirbelschichttrockner, 50-70 min. getrocknet.

Die so hergestellten Granulate werden über ein Sieb der Maschenweite 3 mm schutzklassiert. Das erhaltene Pigmentgranulat ist abriebfest, formstabil und weist eine außergewöhnliche Reinheit des erzeugten Perleffektes auf.

Die erhaltenen Granulate lassen sich in PE/PP-Pulvern bzw. PE/PP-Granulaten ohne Probleme zu einem Masterbatch mit einem Pigmentgehalt von 40-50 % auf einem Doppelschneckenextruder verarbeiten.

### II. Untersuchung des Selbsterhitzungsverhaltens

Zur Prüfung des Selbsterhitzungsverhaltens der Granulate gemäß der Beispiele 1 und 2 wird das Prüfverfahren N.4, beschrieben im Kapitel 33.3.1.6. der Recommendations on the Transport of Dangerous Good, Manual of Tests and Criteria, angewendet. Es werden Prüfungen in Drahtkörben mit den Kantenlängen von 25 mm und 100 mm bei Temperaturen von 140 °C durchgeführt, um zu prüfen ob eine spontane Selbstentzündung oder eine gefährliche Selbsterhitzung stattfindet. Grenzkriterium ist dabei ein Temperaturanstieg um mindestens 60 K über die Ofentemperatur innerhalb von 24 h.

### Test 1:

Prüfung der Präparation gemäß Beispiel 1+2 bei 140 °C im 100 mm Drahtkorb: negativ

### Test 2:

Prüfung der Präparation gemäß Beispiel 1+2 bei 140 °C im 25 mm Drahtkorb: negativ

### Test 3:

Prüfung der Präparation gemäß Beispiel 3+4 bei 140 °C im 100 mm Drahtkorb: positiv

### Test 4:

Prüfung der Präparation gemäß Beispiel 3+4 bei 140 °C im 25 mm Drahtkorb: positiv

### Ergebnis:

Durch den Zusatz des Antioxidants in der Haftvermittleremulsion ist eine Selbsterhitzung ausgeschlossen.

Durch die Zugabe des Antioxidants während der Emulgierung ist im Vergleich zum Zusatz des Antioxidants in eine Schmelze eines Kunststoffpulvers eine feinere und effektivere Verteilung zu erzielen. Keine Pigmentpräparation gemäß der Beispiele 1-2 ist als Gefahrgut der Klasse 4.2 einzustufen.

Die Bestimmung des Schmelzpunktes der eingesetzten Wachse in den verwendeten Emulsionen erfolgt mittels Mettler Drop Point analog der ASTM D3954.

## Patentansprüche

1. Pigmentgranulate, **dadurch gekennzeichnet, dass** sie ein oder mehrere plättchenförmige Effektpigmente, Polymerpartikel oder Polymerpartikelmischungen, einen Haftvermittler, ein Antioxidants, und ggf. Additive enthält und das Effektpigment ausgewählt ist aus der Gruppe Perlglanzpigmente, Interferenzpigmente, Metalleffektpigmente, Mehrschichtpigmente mit transparenten, semitransparenten und/oder opaken Schichten, goniochromatische Pigmente, holographische Pigmente, beschichtete oder unbeschichtete BiOCI-Plättchen und/oder LCP-Pigmente, wobei der Anteil der Polymerpartikel bezogen auf das Granulat 5 - 30 Gew.% beträgt und der Anteil an Antioxidans 0,01-5 Gew.% bezogen auf das Granulat beträgt.

2. Pigmentgranulate nach Anspruch 1, **dadurch gekennzeichnet, dass** der Anteil der Effektpigmente bezogen auf das Granulat 60 - 90 Gew.% beträgt.

3. Pigmentgranulate nach Anspruch 1 oder 2, **dadurch gekennzeichnet, dass** die Polymerpartikel aus Polyolefinen bestehen.

4. Pigmentgranulate nach mindestens einem der Ansprüche 1 bis 3, **dadurch gekennzeichnet, dass** die Polymerpartikel aus Polyethylen (PE) oder Polypropylen (PP) bestehen.

5. Pigmentgranulate nach mindestens einem der Ansprüche 1 bis 4, **dadurch gekennzeichnet, dass** die Polymerpartikel aus LD-PE oder LLD-PE bestehen.

6. Pigmentgranulate nach mindestens einem der Ansprüche 1 bis 5, **dadurch gekennzeichnet, dass** die Polymerpartikel Partikelgrößen von 1-5 mm aufweisen.

7. Pigmentgranulate nach mindestens einem der Ansprüche 1 bis 6, **dadurch gekennzeichnet, dass** der Haftvermittler eine Wachs-Emulsion ist.

8. Pigmentgranulate nach mindestens einem der Ansprüche 1 bis 7, **dadurch gekennzeichnet, dass** der Haftvermittler eine HD-PE, LD-PE, LLD-PE, VLD-PE oder PP-Wachs-Emulsion ist.

9. Pigmentgranulate nach mindestens einem der Ansprüche 1 bis 8, **dadurch gekennzeichnet, dass** der Anteil an Haftvermittler bezogen auf die Pigmentpräparation 1- 20 Gew.% beträgt.

10. Pigmentgranulate nach mindestens einem der Ansprüche 1 bis 9, **dadurch gekennzeichnet, dass** die Granulate ausgewählt aus der Gruppe der Gleitmittel, Netzmittel enthalten.

11. Pigmentgranulate nach mindestens einem der Ansprüche 1 bis 10, **dadurch gekennzeichnet, dass** der Anteil der Additive im Granulat 0,1 - 10 Gew.% beträgt.

12. Pigmentgranulate nach mindestens einem der Ansprüche 1 bis 11, **dadurch gekennzeichnet, dass** die Pigmentpräparation ein oder mehrere Antioxidantien enthält.

13. Pigmentgranulate nach einem oder mehreren der Ansprüche 1 bis 12, **dadurch gekennzeichnet, dass** das Antioxidans ausgewählt ist aus der Gruppe der
- Lacton/Phospit-Mischungen
- Lacton/Phospit/Phenol-Mischungen
- Phenol/Phosphit-Mischungen
- Phosphite
- Phenole.

14. Pigmentgranulate nach einem oder mehreren der Ansprüche 1 bis 13, **dadurch gekennzeichnet, dass** sie
60 - 90 Gew.% eines oder mehrerer Effektpigmente 5 - 30 Gew.% Polymerpartikel
1 - 30 Gew.% Haftvermittler
0,1-10 Gew.% Additive
0,01-5 Gew.% Antioxidans
bezogen auf das Pigmentgranulat enthält,
wobei der Gesamtanteil aller Komponenten in dem Granulat ≤ 100 Gew.% beträgt.

15. Pigmentgranulate nach einem oder mehreren der Ansprüche 1 bis 14, **dadurch gekennzeichnet, dass** das Granulat zusätzlich anorganische Füllstoffe, Farbstoffe und/oder organische oder anorganische Farbpigmente enthält.

16. Verfahren zur Herstellung einer Pigmentgranulate nach einem oder mehreren der Ansprüche 1 bis 15, **dadurch gekennzeichnet, dass** ein oder mehrere plättchenförmige Effektpigmente, ein oder mehrere Polymerpartikel, mindestens ein Haftvermittler, mindestens ein Antioxidans und ggf. ein oder mehrere Additive gleichzeitig oder nacheinander miteinander gemischt werden.

17. Verwendung der Pigmentgranulate nach einem oder mehreren der Ansprüche 1 bis 15 zur Pigmentierung von Pulverlacken, Kunststoffen und zur Herstellung von Masterbatches.

18. Verwendung der Pigmentgranulate nach Anspruch 17 in Masterbatch-Anwendungen, **dadurch gekennzeichnet, dass** bei der Herstellung des Masterbatches das Pigmentgranulat nach einem oder mehreren der Ansprüche 1 bis 15 in Mischung mit Kunststoffpulvern oder in Mischung mit Kunststoff-Granulaten eingesetzt wird.

## Claims

1. Pigment granules, **characterised in that** they comprise one or more flake-form effect pigments, polymer particles or polymer particle mixtures, an adhesion promoter, an antioxidant and optionally additives and the effect pigment is selected from the group pearlescent pigments, interference pigments, metal-effect pigments, multilayered pigments having transparent, semitransparent and/or opaque layers, goniochromatic pigments, holographic pigments, coated or uncoated BiOCl flakes and/or LCP pigments, where the proportion of the polymer particles, based on the granules, is 5 - 30% by weight and the proportion of antioxidant is 0.01-5% by weight, based on the granules.

2. Pigment granules according to Claim 1, **characterised in that** the proportion of the effect pigments, based on the granules, is 60 - 90% by weight.

3. Pigment granules according to Claim 1 or 2, **characterised in that** the polymer particles consist of polyolefins.

4. Pigment granules according to at least one of Claims 1 to 3, **characterised in that** the polymer particles consist of polyethylene (PE) or polypropylene (PP).

5. Pigment granules according to at least one of Claims 1 to 4, **characterised in that** the polymer particles consist of LD-PE or LLD-PE.

6. Pigment granules according to at least one of Claims 1 to 5, **characterised in that** the polymer particles have particle sizes of 1-5 mm.

7. Pigment granules according to at least one of Claims 1 to 6, **characterised in that** the adhesion promoter is a wax emulsion.

8. Pigment granules according to at least one of Claims 1 to 7, **characterised in that** the adhesion promoter is an HD-PE, LD-PE, LLD-PE, VLD-PE or PP wax emulsion.

9. Pigment granules according to at least one of Claims 1 to 8, **characterised in that** the proportion of adhesion promoter, based on the pigment prearation, is 1-20% by weight.

10. Pigment granules according to at least one of Claims 1 to 9, **characterised in that** the granules comprise additives selected from the group of the lubricants and wetting agents.

11. Pigment granules according to at least one of Claims 1 to 10, **characterised in that** the proportion of the additives in the granules is 0.1 - 10% by weight.

12. Pigment granules according to at least one of Claims 1 to 11, **characterised in that** the pigment preparation comprises one or more antioxidants.

13. Pigment granules according to one or more of Claims 1 to 12, **characterised in that** the antioxidant is selected from the group of the
- lactone/phospite mixtures
- lactone/phospite/phenol mixtures
- phenol/phosphite mixtures
- phosphites
- phenols.

14. Pigment granules according to one or more of Claims 1 to 13, **characterised in that** they comprise
60 - 90% by weight of one or more effect pigments
5 - 30% by weight of polymer particles
1 - 30% by weight of adhesion, promoters
0.1 - 10% by weight of additives
0.01 - 5% by weight of antioxidant,
based on the pigment granules,
where the total proportion of all components in the granules is ≤ 100% by weight.

15. Pigment granules according to one or more of Claims 1 to 14, **characterised in that** the granules additionally comprise inorganic fillers, dyes and/or organic or inorganic coloured pigments.

16. Process for the preparation of pigment granules according to one or more of Claims 1 to 15, **characterised in that** one or more flake-form effect pigments, one or more polymer particles, at least one adhesion promoter, at least one antioxidant and optionally one or more additives are mixed with one another simultaneously or successively.

17. Use of the pigment granules according to one or more of Claims 1 to 15 for the pigmentation of powder coatings, plastics and for the preparation of masterbatches.

18. Use of the pigment granules according to Claim 17 in masterbatch applications, **characterised in that**, in the preparation of the masterbatch, the pigment granules according to one or more of Claims 1 to 15 are employed in a mixture with plastic powders or in a mixture with plastic granules.

## Revendications

1. Granules pigmentaires, **caractérisés en ce qu'**ils comprennent un(e) ou plusieurs pigment(s) d'effet sous forme de flocons, particule(s) polymérique(s) ou mélange(s) de particules polymériques, un promoteur d'adhérence, un antioxydant et en option, des additifs, et le pigment d'effet est sélectionné parmi le groupe qui est constitué par les pigments perlés, les pigments d'interférence, les pigments à effet métallique, les pigments à multiples couches qui comportent des couches transparentes, semi-transparentes et/ou opaques, les pigments goniochromatiques, les pigments holographiques, les flocons de BiOCl revêtus ou non revêtus et/ou les pigments LCP, où la proportion des particules polymériques, sur la base des granules, est de 5 - 30 % en poids et la proportion d'antioxydant est de 0,01 - 5 % en poids, sur la base des granules.

2. Granules pigmentaires selon la revendication 1, **caractérisés en ce que** la proportion des pigments d'effet, sur la base des granules, est de 60 - 90 % en poids.

3. Granules pigmentaires selon la revendication 1 ou 2, **caractérisés en ce que** les particules polymériques sont constituées par des polyoléfines.

4. Granules pigmentaires selon au moins l'une des revendications 1 à 3, **caractérisés en ce que** les particules polymériques sont constituées par du polyéthylène (PE) ou par du polypropylène (PP).

5. Granules pigmentaires selon au moins l'une des revendications 1 à 4, **caractérisés en ce que** les particules polymériques sont constituées par du LD-PE ou par du LLD-PE.

6. Granules pigmentaires selon au moins l'une des revendications 1 à 5, **caractérisés en ce que** les particules polymériques présentent des dimensions de particules de 1 - 5 mm.

7. Granules pigmentaires selon au moins l'une des revendications 1 à 6, **caractérisés en ce que** le promoteur d'adhérence est une émulsion de cire/paraffine.

8. Granules pigmentaires selon au moins l'une des revendications 1 à 7, **caractérisés en ce que** le promoteur d'adhérence est une émulsion de cire/paraffine HD-PE, LD-PE, LLD-PE, VLD-PE ou PP.

9. Granules pigmentaires selon au moins l'une des revendications 1 à 8, **caractérisés en ce que** la proportion de promoteur d'adhérence, sur la base de la préparation de pigments, est de 1 - 20 % en poids.

10. Granules pigmentaires selon au moins l'une des revendications 1 à 9, **caractérisés en ce que** les granules comprennent des additifs qui sont sélectionnés parmi le groupe qui est constitué par les lubrifiants et les agents mouillants.

11. Granules pigmentaires selon au moins l'une des revendications 1 à 10, **caractérisés en ce que** la proportion des additifs dans les granules est de 0,1 - 10 % en poids.

12. Granules pigmentaires selon au moins l'une des revendications 1 à 11, **caractérisés en ce que** la préparation de pigments comprend un ou plusieurs antioxydant(s).

13. Granules pigmentaires selon une ou plusieurs des revendications 1 à 12, **caractérisés en ce que** l'antioxydant est sélectionné parmi le groupe constitué par :
- les mélanges lactone/phosphite
- les mélanges lactone/phosphite/phénol
- les mélanges phénol/phosphite
- les phosphites
- les phénols.

14. Granules pigmentaires selon une ou plusieurs des revendications 1 à 13, **caractérisés en ce qu'**ils comprennent :
60 - 90 % en poids d'un ou de plusieurs pigment(s) d'effet 5 - 30 % en poids de particules polymériques
1 - 30 % en poids de promoteurs d'adhérence
0,1 - 10 % en poids d'additifs
0,01 - 5 % en poids d'antioxydant,
sur la base des granules pigmentaires,
où la proportion totale de tous les composants dans les granules est ≤ 100 % en poids.

15. Granules pigmentaires selon une ou plusieurs des revendications 1 à 14, **caractérisés en ce que** les granules comprennent de manière additionnelle des agents de remplissage inorganiques, des colorants et/ou des pigments colorés organiques ou inorganiques.

16. Procédé pour la préparation de granules pigmentaires selon une ou plusieurs des revendications 1 à 15, **caractérisé en ce qu'**un ou plusieurs pigment(s) d'effet sous forme de flocons, une ou plusieurs particule(s) polymérique(s), au moins un promoteur d'adhérence, au moins un antioxydant et en option, un ou plusieurs additif(s) sont mélangés les uns avec les autres simultanément ou en succession.

17. Utilisation des granules pigmentaires selon une ou plusieurs des revendications 1 à 15 pour la pigmentation de revêtements pulvérulents, de matières plastiques et pour la préparation de mélanges maîtres.

18. Utilisation des granules pigmentaires selon la revendication 17 dans des applications de mélange maître, **caractérisée en ce que**, lors de la préparation du mélange maître, les granules pigmentaires selon une ou plusieurs des revendications 1 à 15 sont utilisés selon un mélange avec des poudres de matière plastique ou selon un mélange avec des granules de matière plastique.
